# EUROPEAN PATENT SPECIFICATION

(11) **EP 0 447 077 B1**
(45) Date of publication and mention of the grant of the patent: **31.01.1996**
(21) Application number: 91301705.9
(22) Date of filing: 01.03.1991
(51) Int. Cl.: G02F 1/136

(54) **Electro-optical device**
Elektrooptische Vorrichtung
Dispositif électro-optique

(30) Priority: 09.03.1990 JP 59090/90
(43) Date of publication of application: 18.09.1991
(73) Proprietor: SEIKO INSTRUMENTS INC., Tokyo 136 (JP)
(72) Inventor: Maeda, Takeshi, Koto-ku, Tokyo (JP); Iwasa, Koji, Koto-ku, Tokyo (JP)
(74) Representative: Kenyon, Sarah Elizabeth

(56) References cited:
- EP-A- 0 202 092
- EP-A- 0 296 663

## Description

The present invention relates to an electro-optical device, and especially to an electro-optical device in the form of an active matrix display panel wherein each unit pixel includes a pixel electrode and an associated non-linear resistance element.

A liquid crystal display panel has the advantages of being a thin, light weight display panel having low power consumption. Such panels are currently used in a variety of applications, especially in lap top or book type personal computers. Amongst the conventional liquid crystal display panels, active matrix display panels have received a great deal of attention in view of their high resolution, and high image quality.

Typical active elements employed in such panels are a three terminal element using a thin film transistor, a two terminal element represented by a non-linear resistance element (e.g. a metal-insulator-metal (MIM) resistance element), and a p-n junction thin film diode. However, these conventional active elements suffer from various drawbacks.

The three terminal element is produced by means of a complicated fabrication process, so that a low yield and high cost are inevitable. And the diode mentioned above has a low break down voltage and is susceptible to static electricity.

By contrast, the non-linear resistance element has a simple-structure and a high break down voltage of 25 V or more. Therefore, the non-linear resistance element is preferable for a display panel having a large area produced at low cost.

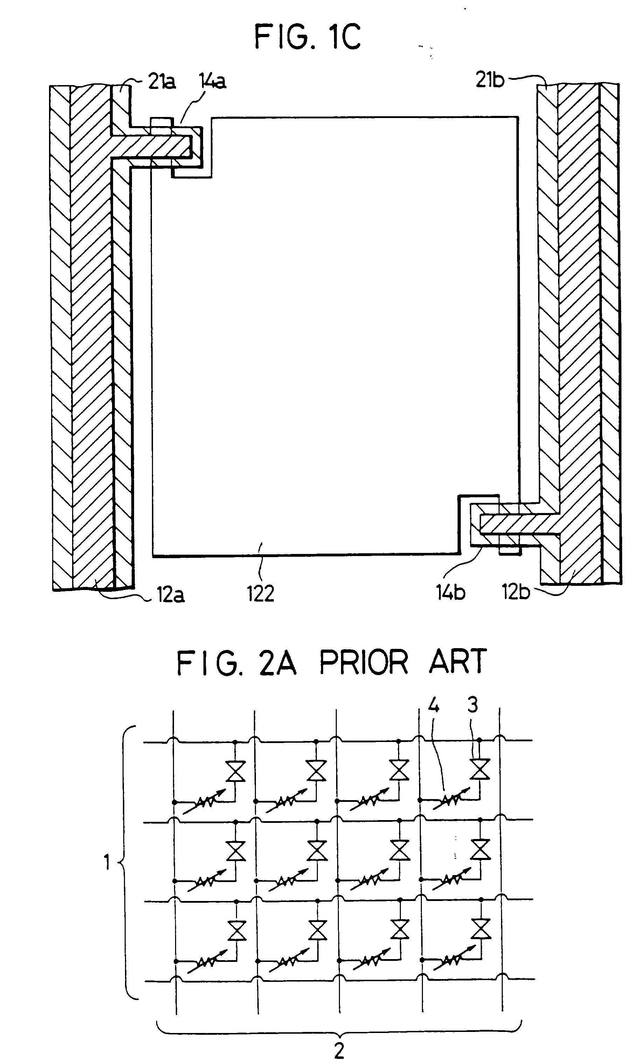

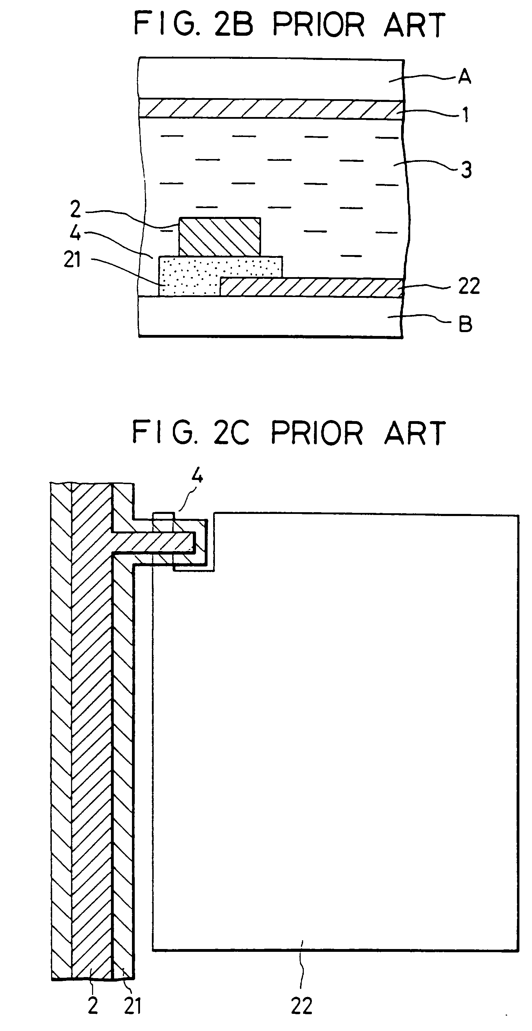

A conventional electro-optical device using non-linear resistance elements is shown in Figures 2A to 2C with Figure 2A being a circuit diagram showing an X-Y matrix panel circuit of the device, Figure 2B being a sectional view showing the structure of a unit cell of the device, and Figure 2C being a plan view showing the structure of one of the non-linear resistance elements.

Referring to Figures 2A to 2C, a plurality, namely one hundred to one thousand, of row electrodes 1 and a plurality, namely one hundred to one thousand, of column electrodes 2 are generally formed on opposed substrates A and B, respectively. At each X-Y intersection, a pixel electrode 22 and a non-linear resistance layer 21, constituting a non-linear resistance element 4, are connected to a corresponding one of the column electrodes 2. An electro-optical material 3 is sealed between the substrates A and B. When this structure is used as a liquid crystal display panel, the substrates A and B are generally made of glass, the row and pixel electrodes 1 and 22 are generally made of indium tin oxide (ITO), the column electrode 2 is generally made of Cr or Al, and the non-linear resistance layer 21 is generally made of Si-rich silicon nitride.

An optical device of this character is shown in EP-A-0202092.

Operation of this type of liquid crystal display panel is as follows. The row electrodes 1 (or column electrodes 2) in Figures 2A to 2C are sequentially selected one by one, and data is written by applying a voltage to each corresponding column electrode 2 (or row electrode 1) in the selection period.

In order to provide a display with a sufficient contrast ratio (eg. a contrast ratio of 10:1 or more), a root-mean-square (RMS) voltage applied to the liquid crystal material at a selected pixel must be higher than a saturation voltage of the liquid crystal material, and an RMS voltage applied to the liquid crystal material at a non-selected pixel must be lower than a threshold voltage of the liquid crystal material. The non-linear resistance element 4 has characteristics defined such that the resistance of the element changes exponentially with the voltage applied thereto. For this reason, a higher voltage is arranged to be applied to the non-linear resistance element 4 of a selected pixel within a selection period to decrease the element resistance (e.g. to 10⁸ Ω or less), so that a charge can easily be injected into the pixel electrode 22. At a half selected pixel, a voltage applied to the non-linear resistance element 4 is suppressed to be low within the selection period. In this case, the resistance of the element is not decreased (e.g. being 10⁹ Ω or more), and charge tends not to be injected into the pixel electrode 22. During a retention period, a low voltage is applied to the non-linear resistance elements 4 of both the selected and the non-selected pixels, and the resistance of the non-linear resistance elements is kept high (e.g. being 10¹¹ Ω or more), thereby increasing the charge retention capacity of each element.

As is apparent from the above description, when the non-linear resistance element is used, the RMS voltage applied to the liquid crystal material can be kept higher than the saturation voltage of the liquid crystal material at the selected pixels and lower than the threshold voltage at the non-selected pixels. Therefore, a high contrast ratio can be obtained even if the number of dots is increased.

In order to provide a display on such a liquid crystal display panel, it is important to determine the driving voltage, the composition and thickness of the non-linear resistance layer 21, and the structure of the non-linear resistance element 4 so as to obtain a desired resistance for the non-linear resistance element 4 during the selection and retention periods. It is also important to increase the ratio of the capacitance C_{LC} of the liquid crystal section of each pixel to the capacitance C_{I} of the non-linear resistance element 4 of each pixel (to be at least C_{LC}/C_{I} ≥ 5) so as to obtain a sufficient operating margin and to compensate for a distribution of element characteristics and their deviation over time.

Although the above display panel using non-linear resistance elements can have a large capacity, a problem arises if a grey scale display is to be produced in addition to a simple on/off display, especially by comparison with a display panel using three terminal elements. This is for the following reason.

Since each three terminal element is operated as a perfectly independent switch, a given charge injected into one pixel is rarely influenced by a charge written in another pixel during a period of retention of the given charge. In the case of the non-linear resistance element, however, a very small current (up to about 10 pA) flows even during the retention period. Data stored in other pixels gradually influences data stored in each respective pixel throughout the corresponding column electrodes (or row electrodes). For this reason, the RMS voltage applied to the liquid crystal material in accordance with a display pattern gradually deviates from the pre-determined value. In addition, since the resistance of the element greatly influences the charge injection capacity and the charge retention capacity, element characteristics vary over the panel surface and shift as a result of deterioration with time. These changes in element characteristics cause a direct change in the RMS voltage applied to the liquid crystal material. For this reason, when an RMS voltage applied to the liquid crystal material has to be controlled with high precision, as in a multi-level grey scale display, a contrast variation results, making it difficult to provide a normal display. This variation increases when the panel size is increased and when the number of dots is increased, which is a nuisance.

EP-A-0296633 discloses an electro-optical device in which each pixel electrode is connected to first and second row electrodes through diodes, a reference voltage being applied to one row electrode and data signals being applied to the other row electrode.

It is an object of the present invention to provide an electro-optical device in which the above problems are avoided or reduced.

The invention provides an electro-optical device wherein a plurality of non-linear resistance elements form a unit with each pixel electrode, and wherein each pixel electrode is connected independently through the respective non-linear resistance elements to a corresponding plurality of row, or column, electrodes. The resistance of the non-linear resistance elements may then be controlled using the row, or column, electrodes to provide a stable operation against variation in the characteristics of the non-linear resistance elements and deterioration over time. Further, the data input to one pixel may be free of adverse effect from the data input to other pixels.

In accordance with the present invention there is provided an electro-optical device with the features as claimed in claim 1.

In operation, a signal may be applied to the first and second operating electrodes to control the resistances of the first and second non-linear resistance elements to cause these elements to serve as a switch, and thereby to suppress variation in charge injection amounts caused by non-uniform characteristics and deterioration over time of the non-linear resistance elements. At the same time, variation in leakage amount may be suppressed to allow accurate control of the RMS voltage.

The invention enables a stable, accurate, high quality display such as a grey scale display, to be obtained in a panel using non-linear resistance elements.

Furthermore, an improved data writing capacity and uniform display characteristics are features of the invention, even when there is a distribution in element characteristics or deterioration occurs over time.

As described below, the present invention enables data retention capacity to be improved and provides a stable and arbitrary display regardless of the type of pattern to be displayed.

The present invention will be described further, by way of example, with reference to the accompanying drawings, in which:-
Figure 1A is a circuit diagram of an X-Y matrix panel of an electro-optical device according to an embodiment of the present invention;
Figure 1B is a sectional view showing the structure of a unit cell of the electro-optical device shown in Figure 1A;
Figure 1C is a plan view showing the structure and arrangement of non-linear resistance elements of the electro-optical device shown in Figure 1A;
Figure 2A is a circuit diagram of an X-Y matrix panel of a conventional electro-optical device;
Figure 2B is a sectional view showing the structure of a unit cell of the conventional electro-optical device shown in Figure 2A;
Figure 2C is a plan view showing the structure of a non-linear resistance element of the electro-optical device shown in Figure 2A; and
Figures 3A to 3F are signal wave forms for explaining the operation of the electro-optical device shown in Figures 1A to 1C.

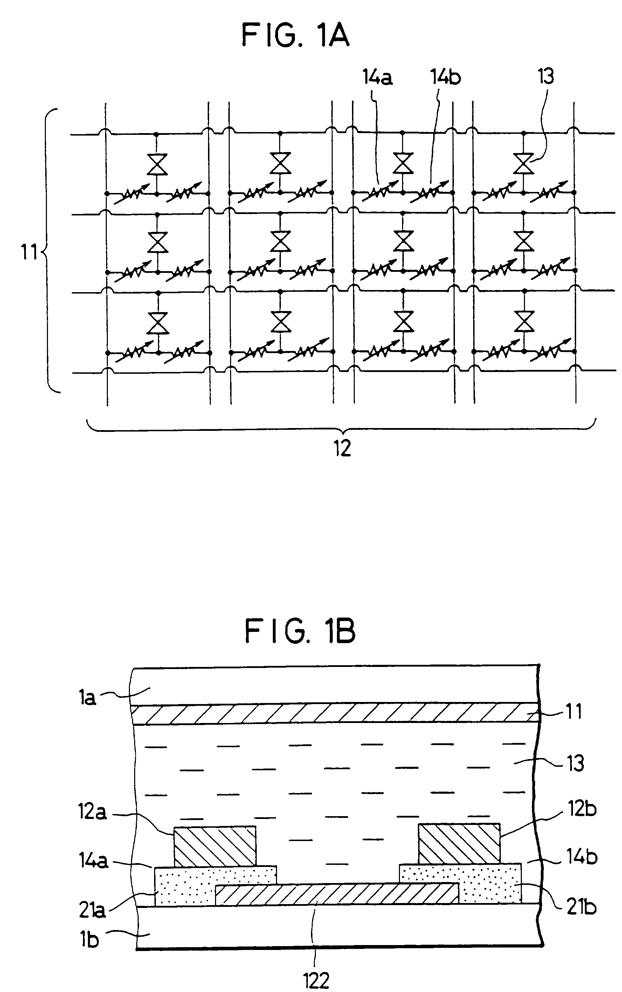

An embodiment of the present invention will now be described in detail with reference initially to Figures 1A to 1C. As shown, an electro-optical device according to the present invention has a plurality of pixel electrodes 122 formed on a substrate 1b. These electrodes are formed by depositing, e.g. ITO film, by sputtering, and by selectively etching the deposited ITO film. Non-linear resistance layers 21a and 21b, e.g. Si-rich SiNx, and operating electrodes 12a and 12b, e.g. Cr, are continuously deposited in the order named, and are continuously etched to connect each pixel electrode 122 to a first operating electrode, 12a, through a first non-linear resistande element, 14a, and to a second operating electrode, 12b, through a second non-linear resistance element, 14b. A counter electrode 11, e.g. ITO film, is formed on a counter substrate 1a. An electro-optical material, 13, e.g. a liquid crystal material, is sealed between the counter substrate 1a and the substrate 1b.

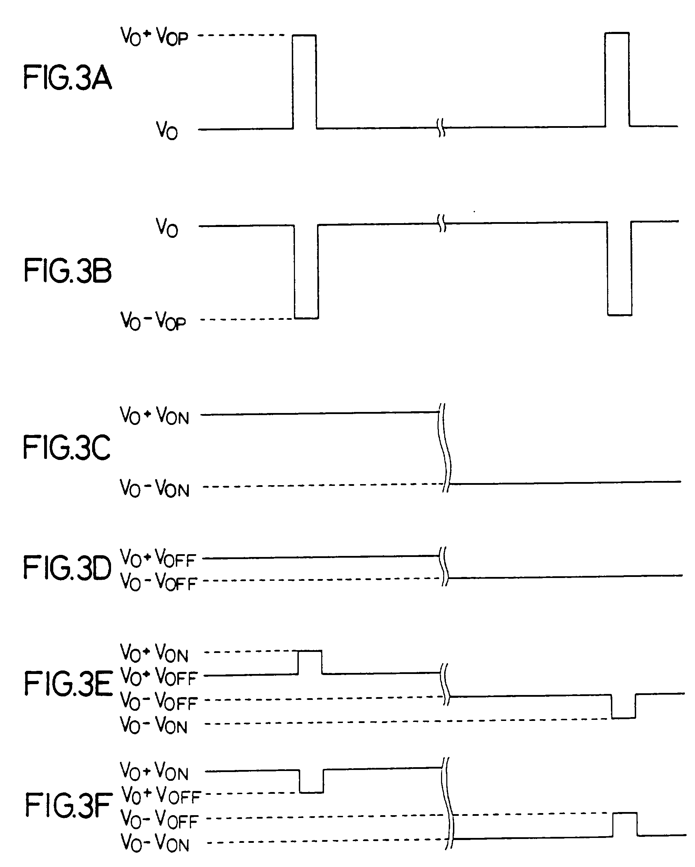

The electro-optical device thus formed operates as follows. Each pair of the operating electrodes 12 in Figure 1A, of which there are a large number, is sequentially selected, and data is written to the associated pixels by the respective counter electrodes 11 within the selection period. Figures 3A to 3F show the signals applied to the electrodes, in which Figure 3A shows an input wave form for the first operating electrode 12a, and Figure 3B shows an input wave form for the second operating electrode 12b. Input waveforms for the counter electrode 11 are shown in Figures 3C to 3F. Referring to Figure 3A, the potential of the operating electrode 12a is kept at V_{O} in a non-selected state but at V_{O} + V_{OP} in a selected state. Referring to Figure 3B, the potential of the operating electrode 12b is kept at V_{O} in a non-selected state but at V_{O} - V_{OP} in a selected state. Since the two non-linear resistance elements 14a and 14b are located very close to each other, their characteristics may be regarded as being identical. The potential of the pixel electrode 122 is always kept at about V_{O}. The voltages applied to each of the non-linear resistance elements are very close to V_{O} and V_{OP} in the non-selected and selected states, respectively. When a sufficiently high voltage (e.g. a voltage which causes the resistance of the element to be 10⁸ Ω or less) is selected for the voltage V_{OP}, each non-linear resistance element has a low resistance (10⁸ Ω or less) in the selected state and a high resistance 10¹ Ω or more) in the non-selected state. In this manner, the non-linear resistance elements can be made to operate as a perfect switch.

Figures 3C, 3D, 3E and 3F show input wave forms for the counter electrode for data patterns to be written in all the pixels aligned along one counter electrode. Figure 3C shows a case wherein all the pixels are selected, Figure 3D shows a case wherein none of the pixels is selected, Figure 3E shows a case wherein one pixel is selected and the remaining pixels are not selected, and Figure 3F shows a case wherein one pixel is not selected and the remaining pixels are all selected.

During a selection period, each non-linear resistance element has a low resistance (10⁸ Ω or less) as mentioned above. As a result of charge injection, a voltage applied to the electro-optical material 13 is V_{ON} when the corresponding pixel is selected. A voltage applied to the electro-optical material 13 is V_{OFF} when the corresponding pixel is not selected. Data inversion is performed for every cycle to prevent the electro-optical material 13 from characteristic degradation by a DC bias when the electro-optical material 13 consists of a liquid crystal material.

The charge stored in the pixel electrode 122 during the selection period is not easily discharged regardless of changes in the potential of the counter electrode 11 since the non-linear resistance elements are kept in a high resistance state (10¹ Ω or more) during a charge retention period. An RMS voltage applied to the electro-optical material 13 is mostly determined by counter electrode data stored during the selection period, and the influence of input data applied to other pixels can be substantially reduced. The fact that the RMS voltage applied to the electro-optical material 13 is determined in accordance with the counter electrode data indicates that the operation of the device does not depend much on the characteristics of the non-linear resistance elements. This is for the following reason. Since charge injection and retention only need be performed by the non-linear resistance elements, the voltage V_{OP} is selected to have a value sufficient to set the resistances of all the elements to be 10⁸ Ω or less. Under this condition, even if variation or deterioration occurs in the element characteristics over time, their resistances can be set to be values low enough to perform write access sufficiently. In this manner, each non-linear resistance element can be reliably operated as a switch.

The non-linear resistance element used in the present invention may comprise: amorphous silicon, silicon nitride, silicon oxide, silicon carbide or silicon oxynitride, whose silicon content is larger than a stoichiometric ratio. Such non-linear resistance elements may contain hydrogen, or at least one of phosphorus and boron.

As has been described above, according to the present invention, a plurality of non-linear resistance elements are formed on each pixel electrode and are operated by a pair of operating electrodes adjacent to each pixel electrode, so that the non-linear resistance elements can have a highly reliable switching function. Therefore, fine adjustment of each pixel can be stably effected. The potential level of each pixel electrode can be stabilised during a selection period and control by a data signal for accurate display of grey scale levels is facilitated. In practice, even if ± 20% variation occurs in the characteristics of the non-linear resistance elements, it may be confirmed that RMS voltages applied to the liquid crystal material still fall within the range of ± 0.1 V of the desired values for all display patterns.

## Claims

1. An electro-optical device comprising opposed substrates (1a, 1b), a material (13) having an electro-optical effect between the two substrates, counter electrodes (11) formed on one of the substrates,operating electrodes (12) formed on the other of the substrates, and pixel electrodes (122) arranged in a matrix on at least said other substrate, a pixel being formed by the material (13) interposed between each counter electrode (11) and a pixel electrode (122), each pixel electrode of each row or column of pixel electrodes being connected to a first operating electrode (12a) through a first non-linear resistance element (14a) characterised in that each pixel electrode of each row or column of pixel electrodes is further connected to a second operating electrode (12b) through a second non-linear resistance element (14b), so that each row or column of pixel electrodes is connected to its corresponding pair of operating electrodes, such that selected voltages can be supplied sequentially to each pair of operating electrodes to alter the resistance of the first and second non-linear resistance elements, said resistance being a function of the voltage applied to said respective non-linear resistance elements (14a and 14b), while data is written to the associated pixel by the respective counter electrode.

2. A device according to claim 1 characterised in that each non-linear resistance element (14a, 14b) comprises a layer essentially consisting of a material selected from the group including: amorphous silicon, silicon nitride, silicon oxide, silicon carbide and silicon oxynitride, whose silicon content is larger than the stoichiometric ratio.

3. A device according to claim 1 or 2 characterised in that each non-linear resistance element (14a, 14b) comprises a layer containing at least one of hydrogen, phosphorus and boron.

## Patentansprüche

1. Elektro-optisches Bauelement mit einander gegenüberliegenden Substraten (1a, 1b), einem Material (13) mit elektro-optischer Wirkung zwischen den beiden Substraten, Gegenelektroden (11), welche auf einem der Substrate ausgebildet sind, Arbeitselektroden (12), welche auf dem anderen der Substrate ausgebildet sind, sowie Pixelelektroden (122), welche zumindest auf dem anderen Substrat matrixförmig ausgebildet sind, wobei ein Pixel von dem zwischen jeder Gegenelektrode (11) und einer Pixelelektrode (122) liegenden Material (13) gebildet ist, wobei jede Pixelelektrode jeder Reihe oder Spalte von Pixelelektroden über ein erstes nichtlineares Widerstandselement mit einer ersten Arbeitselektrode (12a) verbunden ist,
dadurch gekennzeichnet, daß jede Pixelelektrode jeder Reihe oder Spalte von Pixelelektroden ferner über ein zweites nichtlineares Widerstandselement (14b) mit einer zweiten Arbeitselektrode (12b) verbunden ist, so daß jede Reihe oder Spalte von Pixelelektroden mit ihrem entsprechenden Paar Arbeitselektroden verbunden ist, derart, daß zur Änderung des Widerstandswerts der ersten und zweiten nichtlinearen Widerstandselemente ausgewählte Spannungen nacheinander jedem Paar Arbeitselektroden zugeführt werden können, wobei der Widerstandswert eine Funktion der an die jeweiligen nichtlinearen Widerstandselemente (14a und 14b) angelegten Spannung ist, während Daten durch die jeweilige Gegenelektrode an das zugehörige Pixel geschrieben werden.

2. Bauelement nach Anspruch 1,
dadurch gekennzeichnet, daß jedes nichtlineare Widerstandselement (14a, 14b) eine Schicht umfaßt, welche im wesentlichen aus einem Material besteht, das aus der Gruppe ausgewählt ist, die amorphes Silizium, Siliziumnitrid, Siliziumoxid, Siliziumkarbid und Siliziumoxy-nitrid umfaßt, wobei deren Siliziumgehalt größer als das stöchiometrische Verhältnis ist.

3. Bauelement nach Anspruch 1 oder 2,
dadurch gekennzeichnet, daß jedes nichtlineare Widerstandselement (14a, 14b) eine Schicht umfaßt, welche Wasserstoff oder/und Phosphor oder/und Bor umfaßt.

## Revendications

1. Un dispositif électro-optique comprenant des substrats opposés (1a, 1b), un matériau (13) ayant un effet électro-optique entre les deux substrats, des contre-électrodes (11) formées sur l'un des substrats, des électrodes d'attaque (12) formées sur l'autre substrat, et des électrodes de pixels (122) disposées en une matrice au moins sur cet autre substrat, un pixel étant formé par le matériau (13) interposé entre chaque contre-électrode (11) et une électrode de pixel (122), chaque électrode de pixel de chaque ligne ou de chaque colonne d'électrodes de pixels étant connectée à une première électrode d'attaque (12a) par l'intermédiaire d'un premier élément à résistance non linéaire (14a), caractérisé en ce que
chaque électrode de pixel de chaque ligne ou colonne d'électrodes de pixels est en outre connectée à une seconde électrode d'attaque (12b), par l'intermédiaire d'un second élément à résistance non linéaire (14b), de façon que chaque ligne ou colonne d'électrodes de pixels soit connectée à sa paire correspondante d'électrodes d'attaque, pour que des tensions sélectionnées puissent être appliquées séquentiellement à chaque paire d'électrodes d'attaque, pour modifier la résistance des premier et second éléments à résistance non linéaire, cette résistance étant fonction de la tension qui est appliquée aux éléments à résistance non linéaire respectifs (14a et 14b), tandis que des données sont écrites au pixel associé par la contre-électrode respective.

2. Un dispositif selon la revendication 1, caractérisé en ce que chaque élément à résistance non linéaire (14a, 14b) comprend une couche consistant essentiellement en un matériau sélectionné dans le groupe qui comprend : le silicium amorphe, le nitrure de silicium, l'oxyde de silicium, le carbure de silicium et l'oxynitrure de silicium, dont la teneur en silicium est supérieure au rapport stoechiométrique.

3. Un dispositif selon la revendication 1 ou 2, caractérisé en ce que chaque élément à résistance non linéaire (14a, 14b) comprend une couche contenant au moins un élément parmi l'hydrogène, le phosphore et le bore.
